# EUROPEAN PATENT SPECIFICATION

(11) **EP 3 726 073 B1**
(45) Date of publication and mention of the grant of the patent: **07.06.2023**
(21) Application number: 18887941.5
(22) Date of filing: 06.12.2018
(51) Int. Cl.: F16B 37/00, C08J 5/04, F16B 35/00, F16B 33/00, F16B 25/00, B29D 1/00

(54) **MEMBER HAVING SCREW THREAD MADE FROM CARBON FIBER-REINFORCED COMPOSITE MATERIAL**
ELEMENT MIT SCHRAUBGEWINDE AUS KOHLEFASERVERSTÄRKTEM VERBUNDWERKSTOFF
ÉLÉMENT AYANT UN FILETAGE EN MATÉRIAU COMPOSITE RENFORCÉ PAR DES FIBRES DE CARBONE

(30) Priority: 12.12.2017 JP 2017237462
(43) Date of publication of application: 21.10.2020
(73) Proprietor: HARDLOCK INDUSTRY CO., Ltd., Osaka 577-063 (JP)
(72) Inventor: WAKABAYASHI, Katsuhiko, Higashiosaka-shi, Osaka 577-0063 (JP)
(74) Representative: Meissner Bolte Partnerschaft mbB
(86) International application number: PCT/JP2018/044937
(87) International publication number: WO 2019/117012

(56) References cited:
- WO-A1-91/02906
- JP-A- H0 396 709
- JP-A- H0 768 577
- JP-A- H01 259 932
- JP-A- H04 331 811
- JP-A- H05 177 727
- JP-A- H05 177 727
- JP-A- S59 147 111
- JP-A- S59 147 111
- JP-A- 2017 003 091
- JP-A- 2017 003 091
- JP-B2- H 074 874

## Description

### TECHNICAL FIELD

The present invention relates to method of manufacturing a member with threads made of a carbon-fiber-reinforced composite material, such as carbon-fiber-reinforced plastics or carbon-fiber-reinforced carbon composite materials, for example a nut made of carbon-fiber-reinforced plastics.

### BACKGROUND ART

Bolts with a threaded outer periphery and nuts with a threaded inner periphery are used for tightening purposes in a variety of structures. Bolts and nuts made of metal, such as stainless steel, are used in applications that require strength and durability.

Since metallic bolts and nuts are relatively heavy, bolts and nuts made of plastics are used in applications that require neither high strength nor high durability.

In recent years, there has been a growing interest in carbon-fiber-reinforced composite materials due to their low weight as well as their strength, which is substantially equal to that of metal. Their use in members such as threaded bolts and nuts has been investigated, and some of them are disclosed in Patent Documents 1 to 4, listed below.

### PRIOR ART DOCUMENTS

### PATENT DOCUMENTS

Patent Document 1 JP Hei9 (1997)-254266 A
Patent Document 2 JP 2001-289226 A
Patent Document 3 JP 2016-88073 A
Patent Document 4 JP 2017-67129 A

### SUMMARY OF THE INVENTION

### PROBLEMS TO BE SOLVED BY THE INVENTION

The bolt illustrated in FIG. 1 of Patent Document 1 is produced, as described in paragraphs 0025 to 0027 of this document, by preparing a shaft material with a large number of long carbon fibers uniformly oriented in the axial direction and embedded in the matrix, thermally curing the material, and then using a lathe or the like to cut threads on the outer periphery of the shaft.

This means that carbon fibers located within adjacent threads arranged in the axial direction are divided by the lathing; as such, when axial stress is applied to threads, the threads can easily be broken.

Paragraph 0028 of Patent Document 1 also discloses a method of forming a bolt shaft by preparing reinforced fibers having the same length as the to-be-formed bolt shaft that have been impregnated with a matrix in advance, bundling the fibers into a round rod, and thermally compressing them in a mold having an inner periphery provided with male threads.

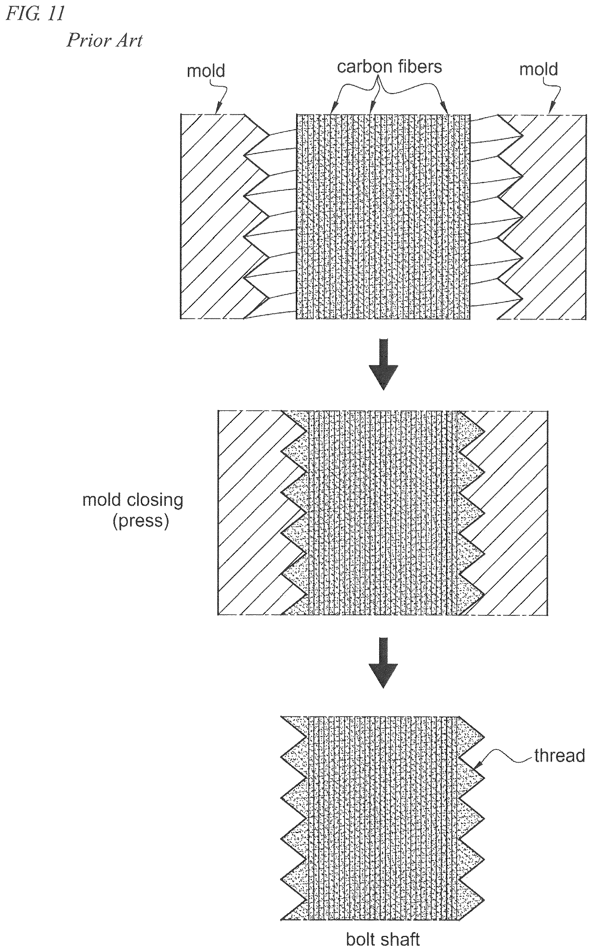

However, in this method of forming a bolt shaft, only matrix seeps out toward the outer periphery during the radially inward compression by the mold, as shown in FIG. 11, which means that no reinforcing fibers are present within the threads and, consequently, the threads are not reinforced. Thus, again, the threads can easily be broken upon application of axial stress to the threads.

Patent Document 2 discloses a method of manufacturing a continuous thread stud by applying phenol resin to a plain cloth of carbon fibers to form a pre-preg, placing a plurality of such pre-pregs over one another, performing thermal compression and burning to form a two-dimensional C/C material, and threading this C/C material.

Since this manufacturing method also forms threads by machining the outer periphery of the C/C material, carbon fibers located within adjacent threads arranged in the axial direction are cut and divided by the machining.

Patent Document 3 discloses a method of manufacturing a bolt or nut by preparing pellets containing short carbon fibers or long carbon fibers, which are used as a raw material for injection molding to form a round rod, and lathing the round rod to form threads on its outer or inner periphery. This manufacturing method, too, is thought to divide carbon fibers located within adjacent threads arranged in the axial direction during lathing.

Patent Document 4 discloses a bolt and nut made of carbon-fiber-reinforced plastics with carbon fibers that are helically wound along thread grooves. In these bolt and nut, large axial stress applied to the threads is in a direction generally perpendicular to the direction of the carbon fibers, which means that the threads are not reinforced by the carbon fibers.

JP H05 177727 A discloses a method for producing a nut, wherein threads of the nut are formed in a cylindrical body on a threaded inner mold with pressure from a pair of slide molds.

An object of the present invention is to propose a novel manufacturing method of a construction of embedded carbon fibers that can reinforce the threads by virtue of the carbon fibers and thus significantly improve the strength of a nut and bolt in which at least the threads are made of a carbon-fiber-reinforced composite material.

### MEANS FOR SOLVING THE PROBLEMS

The present invention is defined by independent claim 1 as appended. Further advantageous embodiments are given by the dependent claims.

That is, the present invention provides a manufacturing method of a member with threads made of a carbon-fiber-reinforced composite material wherein multiple carbon fibers each extending in an axial direction across at least two threads appearing in a longitudinal cross section is embedded in the at least two threads in a zigzag manner along a surface shape of the at least two threads appearing a longitudinal cross section.

According to the present invention, carbon-fiber-reinforced composite materials include carbon-fiber-reinforced plastics and carbon-fiber-reinforced carbon composite materials (hereinafter referred to as "C/C composites").

Preferably, each of the carbon fibers serving as the reinforcing fibers is continuous carbon fiber extending the entire longitudinal range associated with the threads of the member; alternatively, they may be long carbon fibers axially extending part of the range associated with the threads.

Preferably, the plastics serving as the matrix of the carbon-fiber-reinforced composite material are thermosetting plastics; alternatively, they may be thermoplastic plastics. The threads made of a C/C composite may be formed by forming threads made of carbon-fiber-reinforced plastics and then subjecting them to thermal treatment in an inert atmosphere to carbonize the matrix plastics, or may be formed by any other appropriate method.

The feature of the present disclosure is the construction of carbon fibers embedded in the threads; the matrix may be formed by a currently known method or a method that will be developed in the future.

The present disclosure only requires that at least the threads include the above-stated feature; the body of the member may have any appropriate material and structure. For example, the body of the member may be an injection-molded product of carbon-fiber-reinforced plastics reinforced by short carbon fibers, or may be formed from normal plastics or metal containing no reinforcing fibers.

Embedded in the at least two threads in a zigzag manner along a surface shape of the at least two threads appearing in a longitudinal cross section" means that the carbon fibers themselves are bent in a zigzag manner to form at least two ridges; in this construction, adjacent threads arranged in the axial direction appearing in a longitudinal cross section are reinforced by the carbon fibers, thereby significantly improving the strength of the threads.

The threads of the present disclosure may be single-start threads, double-start threads, or multiple-start threads including triple-start threads.

Typically, the member is a nut. The nut of the present invention has a threaded hole with an inner periphery provided with a female threadform constituted by the threads, and each of the carbon fibers is preferably a continuous fiber continuous generally across an entire axial length of the female threadform.

Such a nut having threads made of a carbon-fiber-reinforced composite material has high strength while being lightweight, and may suitably be used in various fields that require strength as well as light weight, such as aircraft or space development, automobiles, motorcycles and railroads, and various fixed structures.

The nut preferably includes a nut body having an attachment hole and a threaded cylinder integrally fitted into the attachment hole of the nut body, and the female threadform is provided at the threaded cylinder. This construction will improve the strength of the threads while allowing the nut body to be formed at relatively low costs and thus reducing the cost of the nut as a whole.

The member may be a bolt. The bolt of the present invention preferably has a threaded shaft with an outer periphery provided with a male threadform constituted by the threads, and each of the carbon fibers is a continuous fiber continuous generally across an entire axial length of the male threadform.

The threaded shaft of the bolt includes a shaft body and a threaded cylinder integrally fitted onto an outer periphery of the shaft body, and the male threadform is provided on the threaded cylinder.

Each of the carbon fibers may be a long carbon fiber having a fiber length required to allow the fiber to be embedded in the at least two threads in a zigzag manner.

Further, it is preferable that each of the multiple fibers be distributed across an entire circumference of the threads.

Although typical examples of the member of the present disclosure are a nut and a bolt, the member may be any member having a threaded hole or a threaded shaft, and may be a structural member for a building or other fixed structures, or a member constituting part of the body or frame of an automobile or an airplane.

### BRIEF DESCRIPTION OF THE DRAWINGS

- FIG. 1: is a perspective view of a nut according to an embodiment of the present invention, some portions being shown in cross sections.
- FIG. 2: is a perspective view of an intermediate product for the nut, some portions being shown in cross sections.
- FIG. 3: is a perspective view of an intermediate product for the nut, some portions being shown in cross sections.
- FIG. 4: is a simplified cross-sectional view of press equipment for manufacturing a threaded cylinder according to an embodiment.
- FIG. 5: is a simplified cross-sectional view of the press equipment, illustrating the press step.
- FIG. 6: is a perspective view of a corrugated plate that has been processed by the press equipment.
- FIG. 7: is a perspective view of a threaded cylinder obtained by curling the corrugated plate.
- FIG. 8: is a perspective view of a threaded cylinder and nut body according to another embodiment, illustrating the step of press-fitting the cylinder into the nut body.
- FIG. 9: is a cross-sectional view of press equipment, illustrating a process of manufacturing the threaded cylinder.
- FIG. 10: is a cross-sectional view of an implementation of the present invention applied to a special anti-loosening double nut.
- FIG. 11: is a cross-sectional view of a bolt shaft obtained by a conventional manufacturing method, illustrating the structure of the shaft.

### EMBODIMENTS FOR CARRYING OUT THE INVENTION

Now, a preferred embodiment of the present invention will be described with reference to the drawings.

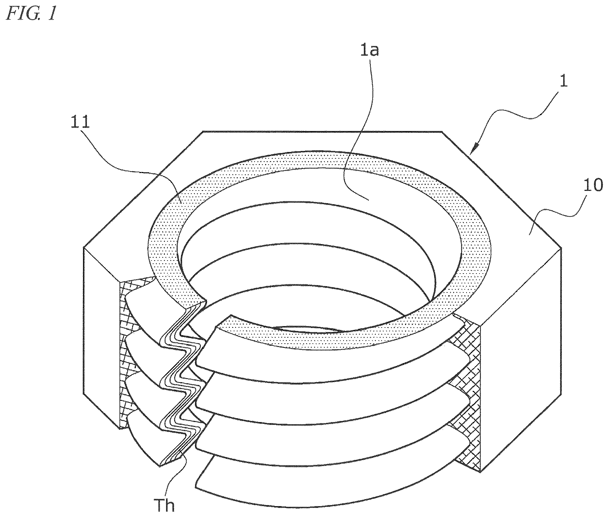

FIG. 1 shows a nut 1 made of carbon-fiber-reinforced plastics according to an embodiment of the present invention, where the nut 1 has a threaded hole 1a with an inner periphery provided with a female threadform constituted by a helical threadform, or threads Th.

More specifically, the nut 1 includes a nut body 10 constituting an outer peripheral portion of the nut and a threaded cylinder 11 constituting an inner peripheral portion of the nut, where the nut body 10 is integrally formed on the outer periphery of the threaded cylinder 11 and the female threadform is provided at the threaded cylinder 11. The outer peripheral surface of the nut body 10 is hexagonal in shape.

Preferably, both the nut body 10 and threaded cylinder 11 are made of carbon-fiber-reinforced plastics. To improve heat resistance, the plastics serving as the matrix are preferably thermosetting plastics; alternatively, thermoplastic plastics may be used in applications that do not require heat resistance.

The thermosetting plastics may be epoxy resin, phenol resin, or unsaturated polyester resin. The thermoplastic plastics may be polyamide, polypropylene or polycarbonate. The carbon fibers serving as the reinforcing material may be PAN-based carbon fibers or pitch-based carbon fibers.

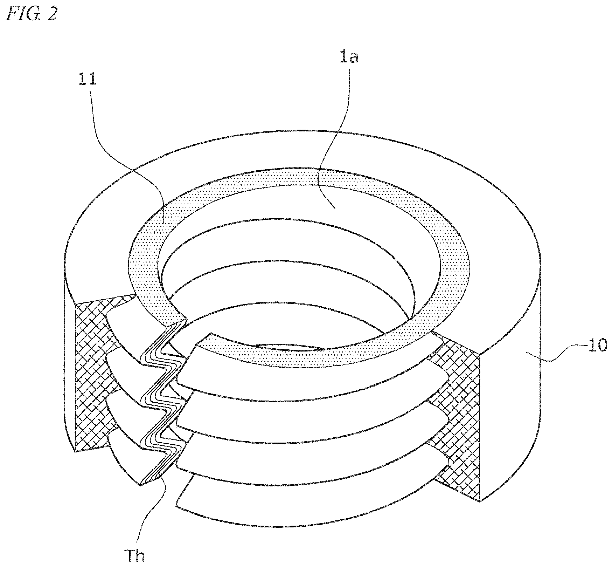

The nut body 10 may be integrally formed on the outer periphery of the threaded cylinder 11 by injection molding, for example; alternatively, it may be produced by any appropriate method, for example, by winding pre-preg tape around the outer periphery of the threaded cylinder 11 and thermally curing it to form an intermediate product, as shown in FIG. 2, and then machining the outer periphery, for example, to form the nut body.

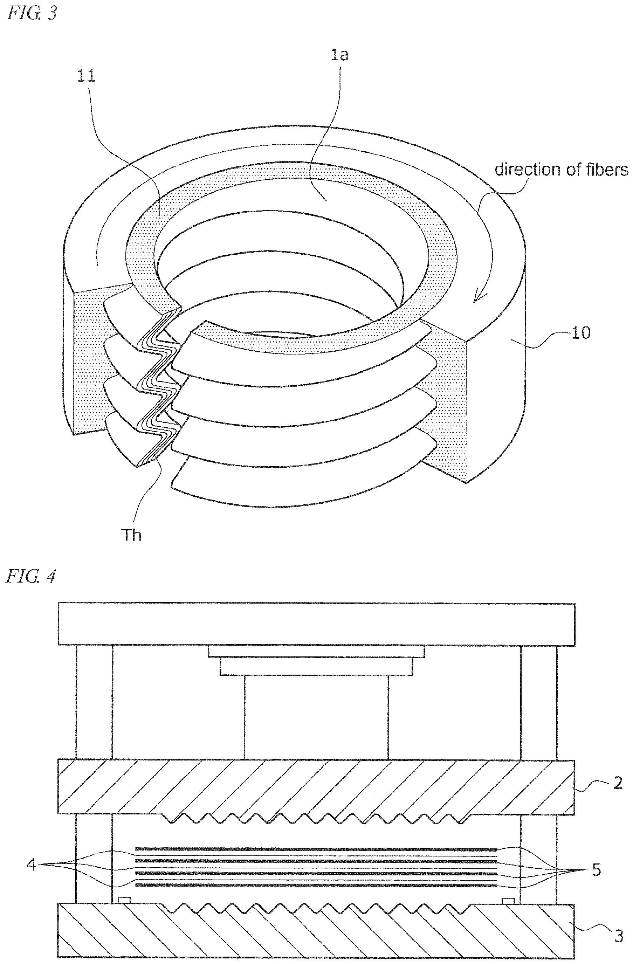

The reinforcing fibers of the nut body 10 may be short carbon fibers, long carbon fibers, or continuous carbon fibers uniformly oriented in the circumferential direction, as shown in FIG. 3. Preferably, the carbon fiber content in the nut body 10 is 20 to 30 wt.%, or 20 to 30 vol.%.

The nut 1 of the present embodiment includes multiple continuous carbon fibers embedded in the threaded cylinder 11, which are continuous across the entire axial length of the threaded hole 1a. The multiple continuous carbon fibers are distributed uniformly along the circumferential direction and distributed uniformly along the thickness direction of the threaded cylinder 11; preferably, the carbon-fiber content in the threaded cylinder 3 is 50 wt.% to 90 wt.%, or 50 vol.% to 90 vol.%.

The continuous carbon fibers extend in the axial direction across all the threads Th arranged in the axial direction appearing in a longitudinal cross section, and embedded in all the threads Th in a zigzag manner along the shape of the surfaces (i.e., shape of the inner surfaces in the present embodiment) of all the threads Th as seen in a longitudinal cross section.

The continuous carbon fibers need not be bent to exactly match the shape of the surfaces of the threads Th, but are only required to be bent so as to be essentially positioned within the threads Th. Short carbon fibers or long carbon fibers may be embedded together with the continuous carbon fibers, or some of the continuous carbon fibers may be uniformly oriented in the circumferential direction or along the helix formed by the threads Th.

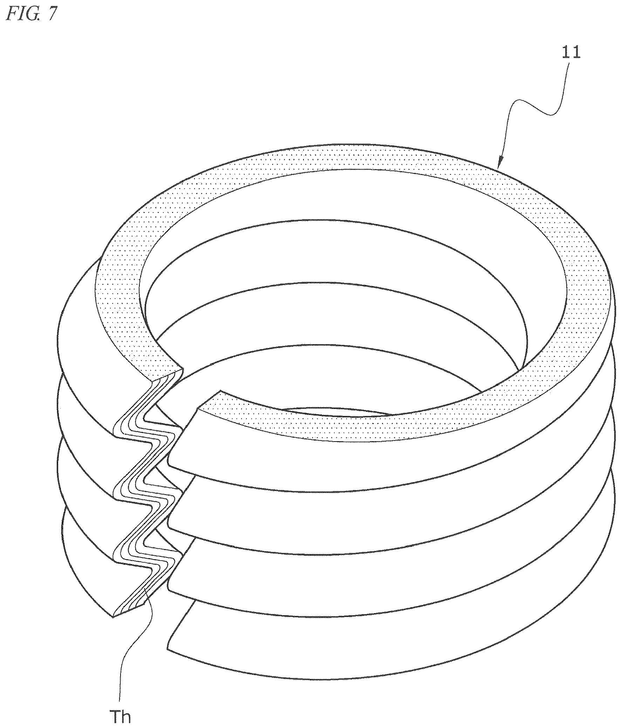

An exemplary method of manufacturing the threaded cylinder 3 will be described below with reference to FIGS. 4 and 7.

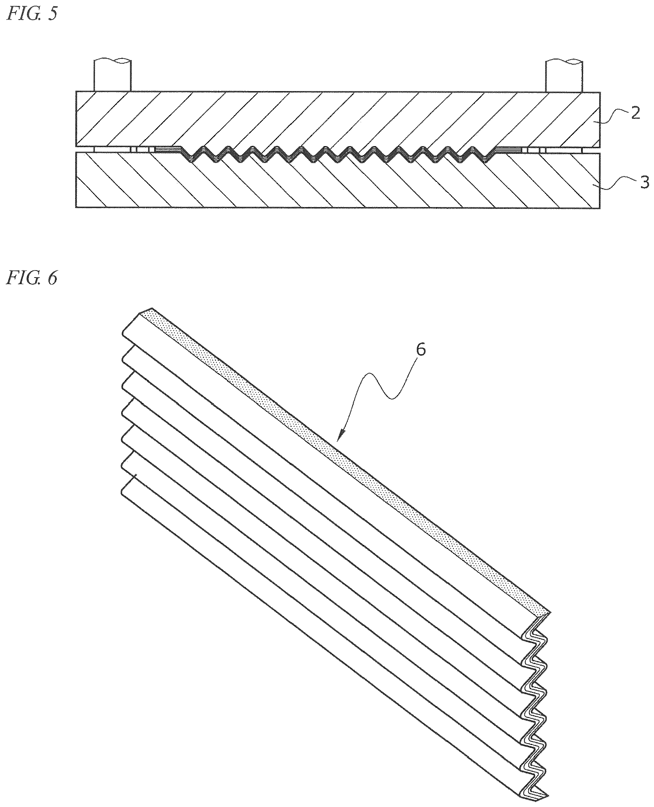

First, a press machine, as shown in FIGS. 4 and 5, is used to form a corrugated plate 6 made of carbon-fiber-reinforced plastics, as shown in FIG. 6. The press machine includes an upper mold half 2 and a lower mold half 3, where those faces of the upper and lower mold halves 2 and 3 which face each other are each provided with a mold face with a corrugated cross-sectional shape.

As shown in FIG. 4, the upper and lower mold halves 2 and 3 are opened, and a plurality of sheets of a material of single-orientation carbon fibers, 4, and a plurality of sheets of thermoplastic plastics serving as the matrix, 5, are placed between the upper and lower mold halves 2 and 3 to be alternate along the vertical direction; then, the mold is closed, as shown in FIG. 5, and the sheets are heated and pressurized to form a corrugated plate 6, as shown in FIG. 6.

Thereafter, if necessary, the corrugated member is heated to a predetermined temperature, and is curled to provide a threaded cylinder 11, as shown in FIG. 7.

If the matrix is made of thermosetting resin, the cylinder may be formed by resin transfer molding (RTF). That is, a plurality of layers of a material of single-orientation carbon fibers that have not been impregnated with resin are placed over one another, press-formed by the upper and lower mold halves 2 and 3 to provide a corrugated plate; then, the resin is injected into the mold to impregnate the carbon fibers with the resin, and is thermally cured.

FIGS. 4 and 5 illustrate an exemplary implementation that uses a mold constructed to form a generally flat corrugated plate; alternatively, a mold may be used that is constructed to form a cylindrical member, as shown in FIG. 7.

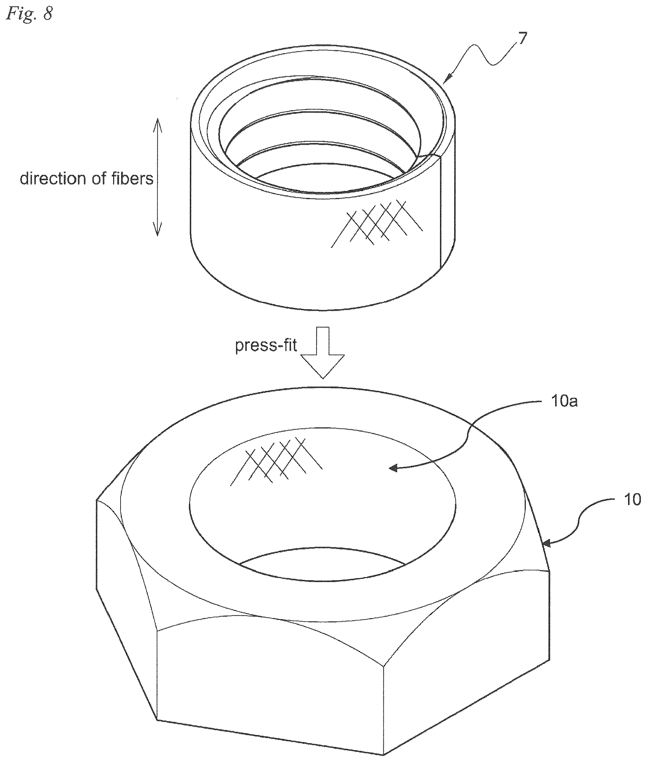

Any method may be used to form the nut body 10 on the outer periphery of the threaded cylinder 11. Further, as shown in FIG. 8, an attachment hole 10a may be provided in the nut body 10 and the intermediate product 7 shown in FIG. 2 or 3 is press-fitted into the attachment hole 10a such that they strongly adhere to each other at their contact surfaces.

In such implementations, to improve the adhesion between the contact surfaces, the inner peripheral surface of the attachment hole 10a and the outer peripheral surface of the intermediate product 7 may be knurled.

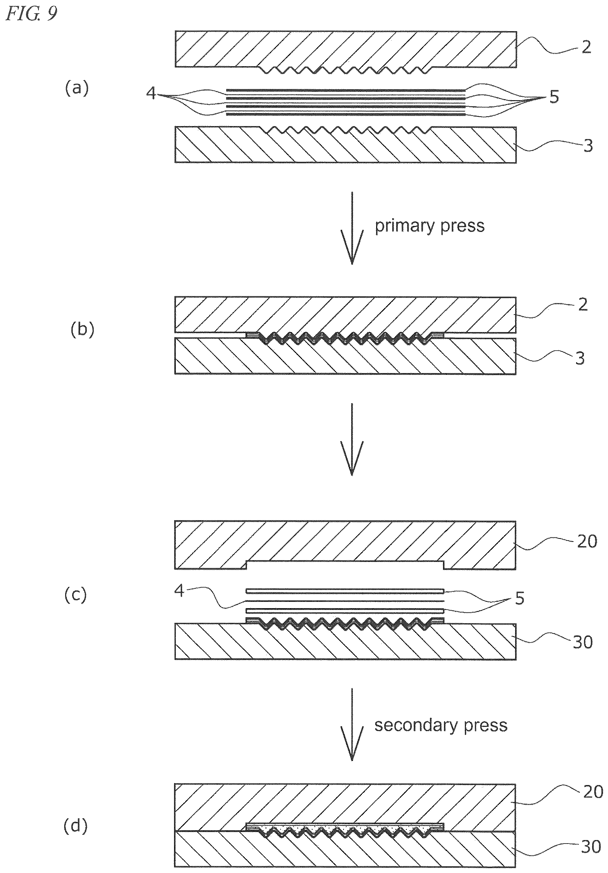

Alternatively, the intermediate product 7 shown in FIG. 8 may be formed by performing a two-stage press process to form a plate of which one face is flat and the other face is corrugated, as shown in FIG. 9, and curling the plate to produce a cylinder. The primary press step in FIG. 9(b) is mainly intended to embed continuous carbon fibers in a zigzag manner.

This step ensures that the continuous carbon fibers are bent in a zigzag manner. The secondary press step in FIG. 9(c) and 9(d) is mainly intended to make one face flat, by conveying the corrugated plate 6 to another set of upper and lower mold halves 20 and 30, further placing carbon fiber sheets 4 and resin sheets 5 thereover and over one another, and pressing the sheets.

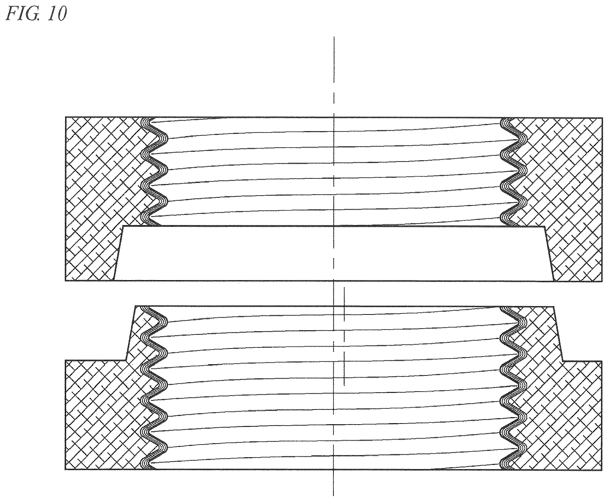

The present invention may be applied to a special anti-loosening double nut manufactured and sold by the present applicant, i.e., a "HARDLOCK" (trademark; International Registration No. 1 224 310) nut, as shown in FIG. 10. Further, it may not only be applied to a nut, but also to a bolt. Further, the present invention may be applied to various members having a thread hole or a thread shaft.

Further, in the context of the above-described manufacturing method, the carbon fiber sheets may be replaced by a pre-preg with continuous carbon fibers that have been impregnated with resin in advance. Alternatively, rather than placing resin sheets over one another, the forming process may use a powder-impregnated yarn, in which resin powder adheres to carbon fibers, or a commingled yarn, in which resin fibers are mixed with a bundle of carbon fibers, thereby improving the impregnation of carbon fibers with resin.

## Claims

1. A method of manufacturing a threaded cylinder
with threads (Th) made of a carbon-fiber-reinforced composite material,
**characterised by** comprising:
- forming a corrugated plate (6) made of carbon-fiber-reinforced plastics by using a press machine which includes an upper mold half (2) and a lower mold half (3), those faces of the upper and lower mold halves (2, 3) which face each other being each provided with a mold face with a corrugated cross-sectional shape;
and
- curling the corrugated plate to provide the threaded cylinder in which multiple carbon fibers each extending in an axial direction across at least two threads (Th) appearing in a longitudinal cross section is embedded in the at least two threads (Th) in a zigzag manner along a surface shape of the at least two threads (Th) appearing in a longitudinal cross section.

2. The method according to claim 1,
wherein forming the corrugated plate (6) includes the following steps:
- opening the upper and lower mold halves (2, 3);
- then placing a plurality of sheets of a material of single-orientation carbon fibers (4) and a plurality of sheets of thermoplastic plastics serving as a matrix (5) between the upper and lower mold halves (2, 3) to be alternate along the vertical direction;
- then closing the mold (2, 3); and
- subsequently heating and pressurizing the sheets to form the corrugated plate (6).

3. The method according to claim 1,
wherein a matrix of the carbon-fiber-reinforced plastics is made of thermosetting resin, and
wherein forming the corrugated plate (6) includes the following steps:
- placing a plurality of layers over one another, the layers made of a material of single-orientation carbon fibers that have not been impregnated with resin;
- then press-forming the plurality of layers by the upper and lower mold halves (2, 3) to provide the corrugated plate (6);
- then injecting the resin into the mold to impregnate the carbon fibers with the resin; and
- then the resin is thermally cured.

## Patentansprüche

1. Verfahren zur Herstellung eines mit Gewinde versehenen Zylinders mit Gewindgängen (Th) aus einem kohlenstofffaserverstärkten Verbundwerkstoff **dadurch gekennzeichnet,**
**dass** das Verfahren die folgenden Schritte umfasst:
- Formen einer gewellten Platte (6) aus kohlenstofffaserverstärktem Kunststoff unter Verwendung einer Pressmaschine, die eine obere Formhälfte (2) und eine untere Formhälfte (3) aufweist, wobei die einander zugewandten Flächen der oberen und der unteren Formhälfte (2, 3) jeweils eine Formfläche mit gewelltem Querschnitt aufweisen; und
- Biegen der gewellten Platte, um den mit Gewinde versehenen Zylinder zu erhalten, in dem mehrere Kohlenstofffasern, die sich jeweils in einer axialen Richtung über mindestens zwei in einem Längsquerschnitt vorkommende Gewindegänge (Th) erstrecken, in die mindestens zwei Gewindegänge (Th) zickzackförmig entlang einer Oberflächenform der mindestens zwei in einem Längsquerschnitt vorkommenden Gewindegänge (Th) eingebettet sind.

2. Verfahren nach Anspruch 1,
wobei der Schritt des Formens der gewellten Platte (6) die folgenden Schritte umfasst:
- Öffnen der oberen und unteren Formhälfte (2, 3);
- Einlegen einer Vielzahl von Lagen eines Materials aus einheitlich orientierten Kohlenstofffasern (4) und einer Vielzahl von Lagen aus thermoplastischem Kunststoff, als Matrix (5) dienend, zwischen die obere und die untere Formhälfte (2, 3), so dass sie sich in vertikaler Richtung abwechseln;
- Schließen der Form (2, 3); und
- Erwärmen und Beaufschlagen der Platten mit Druck zur Bildung der gewellten Platte (6).

3. Verfahren nach Anspruch 1,
wobei die Matrix des kohlenstofffaserverstärkten Kunststoffs aus einem duroplastischen Harz besteht und
wobei der Schritt des Ausbildens der gewellten Platte (6) die folgenden Schritte umfasst:
- Aufeinanderlegen einer Vielzahl von Lagen übereinander, wobei die Lagen aus einem Material einheitlich orientierter Kohlenstofffasern bestehen, die nicht mit Harz imprägniert worden sind;
- Pressformen der Lagen mit Hilfe der oberen und der unteren Formhälfte (2, 3), um die gewellte Platte (6) zu erhalten;
- Einspritzen des Harzes in die Form, um die Kohlenstofffasern mit dem Harz zu imprägnieren; und
- thermisches Aushärten des Harzes.

## Revendications

1. Procédé de fabrication d'un cylindre à pas de vis
avec des pas de vis (Th) faits à partir d'un matériau composite renforcé par fibres de carbone,
**caractérisé en ce qu'**il comprend les étapes consistant à :
- former une plaque ondulée (6) faites à partir de matières plastiques renforcées par fibres de carbone en utilisant une machine de pressage qui inclut une moitié de moule supérieure (2) et une moitié de moule inférieure (3), ces faces des moitiés de moule supérieure et inférieure (2, 3) qui sont en vis-à-vis étant chacune dotée d'une face de moule avec une forme de section transversale ondulée ; et
- incurver la plaque ondulée pour fournir le cylindre à pas de vis dans lequel une multiplicité de fibres de carbone s'étendant chacune dans une direction axiale à travers au moins deux pas de vis (Th) apparaissant dans une section transversale longitudinale sont noyées dans lesdits au moins deux pas de vis (Th) d'une manière en zigzag le long d'une forme surfacique desdits au moins deux pas de vis (Th) apparaissant dans une section transversale longitudinale.

2. Procédé selon la revendication 1,
dans lequel l'étape consistant à former la plaque ondulée (6) inclut les étapes suivantes consistant à :
- ouvrir les moitiés de moule supérieure et inférieure (2, 3) ;
- puis placer une pluralité de feuilles constituées d'un matériau de fibres de carbone à orientation unique (4) et une pluralité de feuilles constituées de matières plastiques thermoplastiques servant de matrice (5) entre les moitiés de moule supérieure et inférieure (2, 3) pour qu'elles soient en alternance le long de la direction verticale ;
- puis fermer le moule (2, 3) ; et
- par la suite, chauffer et pressuriser les feuilles pour former la plaque ondulée (6).

3. Procédé selon la revendication 1,
dans lequel une matrice des matières plastiques renforcées par fibres de carbone est faite en résine thermodurcissable, et
dans lequel l'étape consistant à former la plaque ondulée (6) inclut les étapes suivantes consistant à :
- placer une pluralité de couches les unes sur les autres, les couches étant faites à partir d'un matériau de fibres de carbone à orientation unique qui n'ont pas été imprégnées de résine ;
- puis former par pressage la pluralité de couches au moyen des moitiés de moule supérieure et inférieure (2, 3) pour fournir la plaque ondulée (6) ;
- puis injecter la résine dans le moule pour imprégner les fibres de carbone avec la résine ; et
- puis faire durcir thermiquement la résine.
